# EUROPEAN PATENT SPECIFICATION

(11) **EP 2 779 718 B1**
(45) Date of publication and mention of the grant of the patent: **08.08.2018**
(21) Application number: 12848645.3
(22) Date of filing: 29.06.2012
(51) Int. Cl.: H04W 24/08, H04W 8/22, H04W 24/02, H04W 24/10

(54) **METHOD, TERMINAL, NETWORK DEVICE AND SYSTEM FOR ACQUIRING QUALITY OF EXPERIENCE**
VERFAHREN, ENDGERÄT, NETZWERKVORRICHTUNG UND SYSTEM ZUR ERFASSUNG EINER ERFAHRUNGSQUALITÄT
PROCÉDÉ, TERMINAL, DISPOSITIF DE RÉSEAU ET SYSTÈME POUR ACQUÉRIR UNE QUALITÉ D'EXPÉRIENCE

(30) Priority: 11.11.2011 CN 201110357414
(43) Date of publication of application: 17.09.2014
(73) Proprietor: ZTE Corporation, Shenzhen, Guangdong 518057 (CN)
(72) Inventor: ZHANG, Hui, Shenzhen Guangdong 518057 (CN)
(74) Representative: Wilson Gunn
(86) International application number: PCT/CN2012/077849
(87) International publication number: WO 2013/067820

(56) References cited:
- EP-A1- 2 360 958
- WO-A1-2005/022852
- CN-A- 1 839 597
- CN-A- 101 577 631
- CN-A- 101 808 307
- CN-A- 101 959 313
- CN-A- 102 223 657
- CN-A- 102 223 657
- US-A1- 2009 227 251
- US-A1- 2011 276 529
- KATRIEN DE MOOR ET AL: "Proposed Framework for Evaluating Quality of Experience in a Mobile, Testbed-oriented Living Lab Setting", MOBILE NETWORKS AND APPLICATIONS, KLUWER ACADEMIC PUBLISHERS, BO, vol. 15, no. 3, 29 January 2010 (2010-01-29), pages 378-391, XP019826741, ISSN: 1572-8153

## Description

### TECHNICAL FIELD

The disclosure relates to Quality of Experience QoE technology in the field of communications, and in particular to a method, a terminal, a network device and a system for acquiring QoE.

### BACKGROUND

In existing technology, a network side, such as a data exchanger, a mobile data switching device, a wireless base station and a wireless base station controller, will negotiate out the Quality of Service QoS of a data service according to subscription information of a user and current network resource conditions when the user initiates the data service. That is, when the user initiates the data service, the control policy of the data service is negotiated out. Here, the QoS includes: a maximum bandwidth, a minimum bandwidth, a time delay, jitter and other parameters. Since the QoS guarantee of the entire Internet Protocol IP network is based on a best effort mechanism, during a process of service, the actual QoS of the user would be changed due to the change of user number and traffic, the movement of a user or the like. Since the network side cannot obtain the actual QoE of the user, no further control can be made during a process of service. The specific analysis is as follows:
QoE is affected by both subjective and objective factors. The subjective factor includes cost, background of users and the like, and the objective factor includes the operating state of terminals and multiple devices crossing vendors and network elements of a network. Here, the background of users includes educational backgrounds, consumption capacities, consumption habits and the like of the users.

CN 102223657 A (CHINA ACADEMY OF TELECOMM TECH19 October 2011) discloses a method of reporting the quality of service QoS, including: determining by a UE QoS parameter information according to QoS measurement configuration information received from the network side; and reporting by the UE the QoS parameter information to the network side. WO 2005/022852 A1 (VIDIATOR ENTPR INC [BS]; SECKIN GAMZE [US]; NAGARAJ RAGHAVENDRA C [US] 10 March 2005) provides a method usable in a wireless communication environment, including defining at least one quality of experience (QoE) metric indicative of a characteristic that affects quality in the wireless communication environment.

At present, the measurement of QoE mainly includes the following three methods:
1. The method of test terminal. Specifically, a testing software is installed on a test terminal to subjectively make a score when a service ends. The defect of this method lies in that: the number of test terminals is small, and the QoE and network conditions of all users cannot be reflected completely. In addition, this method can only obtain the QoE of all users qualitatively, and cannot reflect the QoE of all users objectively and quantificationally.
2. The method of access network and core network. Specifically, a Key Performance Indicator KPI of a network is mapped to the QoE of a user. This method is easy to implement. However, since the KPI is a performance indicator of a network element, it is impossible to implement simple mathematical mapping between the KPI and the QoE. Thus, the defect of this method lies in inaccuracy.
3. The method of service application network elements. Specifically, KPIs and service quality parameters such as service success ratio are accurately measured at a service side. This method is widely used at present. However, the defect of this method lies in that an operator cannot obtain most of these measurement data.

Besides the above, all three methods described above perform analysis after the service ends. That is, the three methods are post-analysis methods. Therefore, the QoS of the user experiences cannot be acquired accurately and conveniently, so that no application has been proposed for performing refined management and control according to the QoE during a process of service.

### SUMMARY

In view of the above, embodiments of the disclosure are intended to provide a method, a network device and a system for acquiring QoE with the features of the independent claims, which can enable a network side to timely and accurately acquire the QoE data of a terminal.

To this end, the technical solutions of the embodiments of the disclosure are implemented as follows.

An embodiment of the disclosure provides a method for acquiring QoE, which includes:
during proceeding of a service, a terminal periodically measures its own QoE data and reports the QoE data to a network side according to a QoE measurement and reporting policy issued by the network side, wherein content of measurement includes: measurement of relevant data bearing QoS, measurement of relevant data of service quality, and collection of subjective perception referred to as subjective data;
the network side analyzes the reported QoE data;
formulating, by the network side, a control policy according to user subscription data, network policy configuration and analysis result stored in the network side; and
performs policy control according to the control policy to form closed-loop control.

In the solution above, the method may further include:
when the terminal initiates the service, the network side issues the QoE measurement and reporting policy to the terminal.

In the solution above, before the QoE measurement and reporting policy is issued to the terminal, the method may further include:
the network side determines the QoE measurement and reporting policy according to user subscription data and network policy configuration.

In the solution above, the operation that the QoE measurement and reporting policy is issued to the terminal may include:
the QoE measurement and reporting policy is issued to the terminal by adding a message type or field in control plane signalling during a process of accessing or activating the service; or,
the QoE measurement and reporting policy is issued to the terminal by way of exchanging media plane messages with the terminal after bearer is established between the terminal and the network side.

In the solution above, before the QoE data are reported to the network side, the method may further include:
the terminal encapsulates the measured QoE data.

In the solution above, the operation that the QoE data are reported to the network side may include:
the QoE data are reported to the network side together with a media plane message.

In the solution above, the method may further include:
An embodiment of the disclosure also provides a system for acquiring QoE, which includes a terminal and a network side, wherein
the terminal is configured to, during proceeding of a service, periodically measure its own QoE data and report the QoE data to the network side according to a QoE measurement and report policy issued by the network side, wherein content of measurement includes: measurement of relevant data bearing QoS, measurement of relevant data of service quality, and collection of subjective perception referred to as subjective data; and
the network side is configured to, during proceeding of a service, issue the QoE measurement and reporting policy to the terminal and receive the QoE data reported from the terminal;
the network side may be further configured to analyze the received QoE data, formulate a control policy according to user subscription data, network policy configuration and analysis result stored in the network side, and perform policy control according to the control policy to form closed-loop control.

In the solution above, the network side may be further configured to, before issuing the QoE measurement and reporting policy to the terminal, determine the QoE measurement and reporting policy according to user subscription data and network policy configuration.

In the solution above, the terminal may be further configured to, before reporting the QoE data to the network side, encapsulate the measured QoE data.

An embodiment of the disclosure also provides a network device, which includes a policy determination module, an issuing module, an analysis module and an execution module, wherein during proceeding of a service,
the policy determination module is configured to determine a QoE measurement and reporting policy, according to user subscription data and network policy configuration; the issuing module is configured to issue the QoE measurement and reporting policy to the terminal;
the analysis module is configured to analyze the received QoE data;
the policy determination module is further configured to formulate a control policy according to the user subscription data, the network policy configuration and analysis result stored in the analysis module, and issue the control policy to the execution module; and
the execution module is configured to perform policy control according to the control policy to form closed-loop control.

With the method and the system for acquiring QoE provided in the embodiments of the disclosure, during proceeding of a service, a terminal periodically measures its own QoE data and reports the QoE data to the network side according to a QoE measurement and reporting policy issued by the network side. In this way, during proceeding of a service, the network side can acquire the QoE data of the terminal timely and accurately, and the acquired QoE data is closer to the true feeling of a user. Moreover, the solutions provided in the embodiments of the disclosure are simple in operation and easy to implement, and can be implemented on all the terminals in a network, such that the QoE data acquired by the network side are more comprehensive and of more value for analysis.

In addition, the network side analyzes the received QoE data and performs policy control. Refined resource allocations can be performed on network devices by taking the QoE as the basis of the network side for executing policy control, and thus can implement real-time refined management and control.

### BRIEF DESCRIPTION OF THE DRAWINGS

Fig. 1 shows a flowchart of a method for acquiring QoE according to an embodiment of the disclosure;
Fig. 2 shows a flowchart of a method for implementing policy control according to an embodiment of the disclosure; and
Fig. 3 shows a structure diagram of a system for acquiring QoE according to an embodiment of the disclosure.

### DETAILED DESCRIPTION

The disclosure is further elaborated below in combination with the accompanying drawings and specific embodiments.

The basic idea of an embodiment of the disclosure is that: during proceeding of a service, a terminal periodically measures its own QoE data and reports the QoE data to the network side according to a QoE measurement and reporting policy issued by the network side.

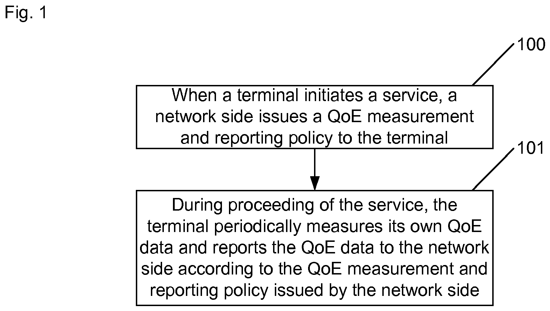

A method for acquiring QoE in an embodiment of the disclosure, as shown in Fig. 1, includes the following steps:
Step 100: When a terminal initiates a service, a network side issues a QoE measurement and reporting policy to the terminal.

Here, the point-in-time the network side issues the QoE measurement and reporting policy to the terminal may specifically be during a process of accessing a service or during a process of activating a service. During the process of an actual application, the specific point-in-time the network side issues the QoE measurement and reporting policy to the terminal may be set as needed.

The process that the QoE measurement and reporting policy is issued to the terminal specifically include that:
the QoE measurement and reporting policy is issued to the terminal by adding a message type or field in control plane signalling during the process of accessing or activating the service; or,
the QoE measurement and reporting policy is issued to the terminal by way of exchanging media plane messages with the terminal after bearer is established between the terminal and the network side.

Since applying control signalling interaction is of high efficiency and enables the terminal to earlier acquire the QoE measurement and reporting policy, during an actual application it is preferred to issue the QoE measurement and reporting policy to the terminal by adding a message type or field in control plane signalling during a process of accessing or activating a service. Here, the specific process of issuing the QoE measurement and reporting policy to the terminal by adding a message type or field in control plane signalling during the process of accessing or activating a service and the specific process of issuing the QoE measurement and reporting policy to the terminal by way of media message interaction after bearer is established between the terminal and the network side belong to commonly-used technical means for those skilled in the art.

Before the QoE measurement and reporting policy is issued to the terminal, the method may further include:
the network side determines, according to user subscription data and network policy configuration, the QoE measurement and reporting policy.

The network side has stored the user subscription data and the network policy configuration in advance. The QoE measurement and reporting policy may specifically include: whether QoE measurement is performed on this service, whether QoE data are reported, a measurement frequency, a reporting frequency and a measurement type. Here, the measurement frequency is used to indicate a period length the terminal measures data relevant to the QoE data, the reporting frequency is used to indicate a period length the terminal reports the QoE data, and the measurement type may include collection of subjective data and/or measurement of objective service data. Here, the subjective data may specifically be a score made subjectively by a user after this service is completed, and the objective service data may specifically include relevant data for bearing QoS, and/or relevant data of service quality. Here, the relevant data for bearing QoS may include: a rate, a time delay and jitter measured according to the measurement frequency in the issued QoE measurement and reporting policy, indicators such as an average rate, a maximum rate and a minimum rate of this measurement period, and indicators such as a measured radio error rate, uplink/downlink interference, a handover/call drop rate and a success rate, and the relevant data of service quality may include corresponding service indicators measured according to a service flow, for example, a Mean Opinion Score MOS measured for the Voice over Internet Protocol VoIP service; a video MOS, a video-on-demand rate and a voice-video synchronization rate measured for a video service; and a page opening speed measured for a Hyper Text Transfer Protocol HTTP browsing service. For different services, corresponding service indicators have different contents.

Step 101: During proceeding of the service, the terminal periodically measures its own QoE data and reports the QoE data to the network side according to the QoE measurement and reporting policy issued by the network side.

Before the QoE data are reported to the network side, the method may further include:
the terminal encapsulates the measured QoE data. Here, a specific process of packaging may adopt existing technology. During an actual application, the terminal may encapsulate the measured QoE data into a special message in an IP packet.

The process that the QoE data are reported to the network side specifically includes:
the QoE data are reported to the network side together with a media plane message. For example, according to a User Datagram Protocol UDP, a message is defined for the QoE data, and is reported to the network side together with a media plane message.

The method may further include:
the network side analyzes the received QoE data, and performs policy control.

Here, the analysis of the received QoE data may specifically include: QoE analysis, network quality analysis, user complaint analysis, and optimization of network.

The process that the policy control is executed specifically includes:
the network side performs policy control according to the user subscription data stored in the network side, the network policy configuration and the analysis result. Here, a specific process of executing policy control is not limited. The executing policy control may specifically include: raising or lowering the user's QoS grade, gate control, charging control, web page redirection and other operations, admission control and congestion control of an access system, and load control, packet scheduling, load balancing, power control and rate adjustment of a network. At present, the policy control not only includes QoE, but also includes adjustment and control of network resources.

Here, it should be noted that, with the solution provided in the embodiment of the disclosure, it is only needed to add a corresponding function to a software, without modifying a hardware module of the original terminal or a corresponding device at the network side.

The disclosure is further elaborated below in combination with embodiments.

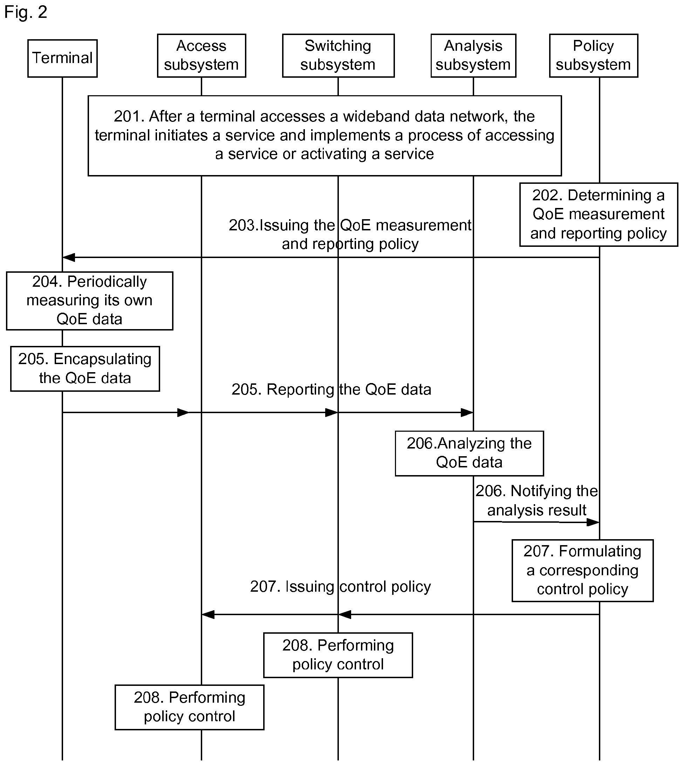

In the embodiment, the network side includes: an access subsystem, a switching subsystem, an analysis subsystem and a policy subsystem. The access subsystem may include a wireless access subsystem, a wired access subsystem and bearer subsystem, and specifically may be a base station, a base station controller, or a Passive Optical Network PON and the like. The switching subsystem may include a mobile switching device and a fixed bandwidth switching device, such as a Gateway General Packet Radio Service GPRS Support Node GGSN, a Servicing GPRS Support Node SGSN, a Mobility Management Entity MME, a Serving Gateway SGW, a Packet Data Network Gateway PGW. The analysis subsystem may be deployed independently, or may also be embedded into the access subsystem or the switching subsystem. The policy subsystem may be deployed independently, or may also be embedded into the access subsystem or the switching subsystem as a policy module. Here, when the policy system is deployed independently, the policy system includes: a Policy and Charging Rules Function PCRF, a Subscriber Profile Repository SPR and other devices. A method for implementing policy control in an embodiment of the disclosure, as shown in Fig. 2, includes the following steps:
Step 201: After a terminal accesses a wideband data network, the terminal initiates a service and implements a process of accessing a service or activating a service.
Step 202: During the process of accessing the service or activating the service, a policy subsystem determines a QoE measurement and reporting policy according to user subscription data and network policy configuration.

Here, the QoE measurement and reporting policy may specifically include: whether QoE measurement is performed on this service, whether QoE data are reported, a measurement frequency, a reporting frequency and a measurement type. Here, the measurement frequency is used to indicate a period length the terminal measures data relevant to the QoE data, the reporting frequency is used to indicate a period length the terminal reports the QoE data, and the measurement type may include collection of subjective data and/or measurement of objective service data.

Step 203: The policy subsystem issues the QoE measurement and reporting policy to the terminal.

Here, the issuing way may include several ways, which may specifically include:
the QoE measurement and reporting policy is issued to the terminal by adding a message type or field in control plane signalling during the process of accessing or activating the service; or,
the QoE measurement and reporting policy is issued to the terminal by way of exchanging media plane messages with the terminal after bearer is established between the terminal and the network side.

During an actual application, it is preferred to issue the QoE measurement and reporting policy to the terminal by adding a message type or field in control plane signalling during the process of accessing the service or activating the service.

Step 204: During proceeding of the service, the terminal periodically measures its own QoE data according to the QoE measurement and reporting policy issued by the network side.

Specifically, the terminal periodically measures its own QoE data according to the measurement frequency in the QoE measurement and reporting policy issued by the network side.

During measurement, the content of measurement includes: measurement of relevant data bearing QoS, measurement of relevant data of service quality, and collection of subjective perception. The subjective perception may be referred to as subjective data.

The measurement of relevant data bearing QoS includes: a rate, a time delay and jitter measured according to the measurement frequency in the issued QoE measurement and reporting policy, and indicators such as an average rate, a maximum rate and a minimum rate of this measurement period, and indicators such as a measured radio error rate, uplink/downlink interference, a handover/call drop rate and a success rate.

The relevant data of service quality may include corresponding service indicators measured according to a service flow, for example, a voice MOS measured for a VoIP service; a video MOS, a video-on-demand rate and a voice-video synchronization rate measured for a video service; and a page opening speed measured for an HTTP browsing service. For different services, corresponding service indicators have different contents.

For the collection of subjective perception, a man-machine conversation may be provided to prompt the user to subjectively make a score when a service is completed, thereby collecting subjective perception.

Step 205: The terminal periodically encapsulates the measured QoE data and reports the encapsulated QoE data to the network side, according to the reporting frequency in the QoE measurement and reporting policy issued by the network side.

Specifically, a message may be defined for the QoE data according to the UDP, and may be reported to the network side together with a media plane message.

When the media message passes through the access subsystem and the switching subsystem, the access subsystem and the switching subsystem parse the QoE data from the media message. Specifically, the QoE data may be detected through a special port of UDP or a characteristic field in the message, thereby parsing the QoE data. After the QoE data are parsed, if policy control is needed, the access subsystem and the switching subsystem execute the policy control on the QoE data. If no policy control is needed, the access subsystem and the switching subsystem transparently issue the parsed QoE data to a corresponding subsequent device. Specifically, if the access subsystem does not need to perform policy control, the access subsystem transparently issues the parsed QoE data to the switching subsystem. After receiving the QoE data, if the switching subsystem does not need to perform policy control, the switching subsystem transparently issue the received QoE data to the analysis subsystem. Here, if the access subsystem and the switching subsystem have configured relevant policy control in advance, they need to perform policy control after acquiring the QoE data. If the access subsystem and the switching subsystem have not configured relevant policy control in advance, they do not need to perform policy control after acquiring the QoE data.

Step 206: After receiving the QoE data, the analysis subsystem at the network side analyzes the QoE data and notifies the analysis result to the policy control subsystem.

Here, while analysis is conducted, multi-dimensional analysis is conducted, which may specifically include: QoE analysis, network quality analysis, user complaint processing, and optimization of network regulations.

Step 207: The policy control subsystem at the network side formulates a corresponding control policy according to the user subscription data stored in the policy control subsystem, the network policy configuration and the analysis result, and issues the control policy to a corresponding executing system.

Here, the executing system may specifically be the access subsystem and/or the switching subsystem.

Step 208: The executing system performs policy control according to the control policy to form closed-loop control.

Here, the executing policy control may specifically include: raising or lowering the user's QoS grade, gate control, charging control, web page redirection and other operations, admission control and congestion control of the access subsystem, and load control, packet scheduling, load balancing, power control, rate adjustment of a network. At present, the policy control not only includes QoE, but also includes adjustment and control of network resources.

The specific implementation process of the step is not the concern of the embodiment of the disclosure, and no further description is needed here.

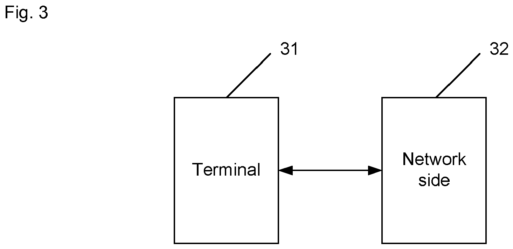

In order to implement the above method, an embodiment of the disclosure also provides a system for acquiring QoE. As shown in Fig. 3, the system includes: a terminal 31 and a network side 32, wherein
the terminal 31 is configured to, during proceeding of a service, periodically measure its own QoE data and report the QoE data to the network side 32 according to a QoE measurement and reporting policy issued by the network side 32; and
the network side 32 is configured to issue the QoE measurement and reporting policy to the terminal 31 and receive the QoE data reported from the terminal 31.

The network side 32 is further configured to, before issuing the QoE measurement and reporting policy to the terminal 31, determine the QoE measurement and reporting policy according to user subscription data and network policy configuration.

The terminal 31 is further configured to, before reporting the QoE data to the network side 32, encapsulate the measured QoE data.

The network side 32 is further configured to analyze the received QoE data and perform policy control.

An embodiment of the disclosure also provides a terminal, which includes: a measurement module and a reporting module, wherein
the measurement module is configured to, during proceeding of a service, measure its own QoE data according to a QoE measurement and reporting policy issued by the network side; and
the reporting module is configured to report the measured QoE data to the network side.

An embodiment of the disclosure also provides a network device, which includes: a policy determination module and an issuing module, wherein
the policy determination module is configured to determine a QoE measurement and reporting policy according to user subscription data and network policy configuration; and
the issuing module is configured to issue the QoE measurement and reporting policy to the terminal.

The policy determination module may be located at a policy subsystem, and the issuing module may be located at an access subsystem and/or a switching subsystem.

The network device further includes:
an analysis module configured to analyze the received QoE data; and/or
an execution module configured to perform policy control according to the user subscription data, the network policy configuration and the analysis result stored in the execution module.

The analysis module may be located at an analysis subsystem, and the execution module may be located at the access subsystem and/or the switching subsystem.

Here, it should be noted that the terminal and the network side in the system in the embodiments of the disclosure and the respective specific processing processes thereof have been described hereinbefore, which is not repeated here.

The above are only the preferred embodiments of the disclosure, and are not intended to limit the scope of protection of the claims of the disclosure.

## Claims

1. A method for acquiring Quality of Experience, QoE, the method comprises:
during proceeding of a service,
periodically measuring (204), by a terminal (31), QoE data of the terminal (31) and reporting (205) the QoE data to an analysis subsystem at a network side (32) according to a QoE measurement and reporting policy issued by a policy control subsystem at the network side (32);
analyzing (206), by the analysis subsystem, the reported QoE data and notifying an analysis result to the policy control subsystem;
formulating (207), by the policy control subsystem, a control policy according to user subscription data stored in the policy control subsystem, network policy configuration and the analysis result, and issuing the control policy to an access subsystem and/or a switching subsystem at the network side (32); and
performing (208), by the access subsystem and/or the switching subsystem, policy control according to the control policy to form closed-loop control.

2. The method according to claim 1, further comprising:
when the terminal (31) initiates the service, issuing (203), by the policy control subsystem, the QoE measurement and reporting policy to the terminal.

3. The method according to claim 2, further comprising: before the QoE measurement and reporting policy are issued to the terminal (31),
determining (202), by the policy control subsystem, the QoE measurement and reporting policy according to the user subscription data and the network policy configuration.

4. The method according to claim 2, wherein the issuing the QoE measurement and reporting policy to the terminal comprises:
issuing the QoE measurement and reporting policy to the terminal (31) by adding a message type or field in control plane signalling during a process of accessing or activating the service; or,
issuing the QoE measurement and reporting policy to the terminal (31) by exchanging media plane messages with the terminal, after bearer is established between the terminal and the network side.

5. The method according to any one of claims 1 to 4, further comprising: before the QoE data are reported to the analysis subsystem,
encapsulating (205), by the terminal (31), the measured QoE data.

6. The method according to claim 5, wherein the reporting the QoE data to the analysis subsystem comprises:
reporting the QoE data to the analysis subsystem together with a media plane message.

7. A system for acquiring Quality of Experience, QoE, the system comprises: a terminal (31) and a network side (32), wherein the network side(32) comprises an access subsystem, a switching subsystem, an analysis subsystem and a policy control subsystem, wherein
the terminal (31) is configured to, during proceeding of a service, periodically measure QoE data of the terminal (31) and report the QoE data to the analysis subsystem at the network side (32) according to a QoE measurement and reporting policy issued by the policy control subsystem; and
the policy control subsystem is configured to, during proceeding of a service, issue the QoE measurement, report policy to the terminal (31) and receive the QoE data reported from the terminal (31);
the analysis subsystem is further configured to analyze the received QoE data and notify an analysis result to the policy control subsystem,
the policy control subsystem is configured to formulate a control policy according to user subscription data stored in the policy control subsystem, network policy configuration and the analysis result, and issue the control policy to the access subsystem and/or the switching subsystem, and
the access subsystem and/or the switching subsystem is configured to perform policy control according to the control policy to form closed-loop control.

8. The system according to claim 7, wherein the policy control subsystem is further configured to, before issuing the QoE measurement and reporting policy to the terminal, determine the QoE measurement and reporting policy according to the user subscription data and the network policy configuration.

9. The system according to claim 7 or 8, wherein the terminal (31) is further configured to, before reporting the QoE data to the analysis subsystem, encapsulate the measured QoE data.

10. A network device, the network device comprises: a policy determination module, an issuing module, an analysis module and an execution module, wherein during proceeding of a service,
the policy determination module is configured to determine a Quality of Experience QoE measurement and reporting policy, according to user subscription data and network policy configuration;
the issuing module is configured to issue the QoE measurement and reporting policy to the terminal;
the analysis module is configured to analyze the received QoE data;
the policy determination module is further configured to formulate a control policy according to the user subscription data, the network policy configuration, and an analysis result stored in the analysis module, and issue the control policy to the execution module; and
the execution module is configured to perform policy control according to the control policy to form closed-loop control.

## Patentansprüche

1. Verfahren zum Erlangen einer Erfahrungsqualität, QoE, wobei das Verfahren aufweist:
während eines Ablaufs eines Dienstes:
periodisches Messen (204) von QoE-Daten eines Endgeräts (31) durch das Endgerät (31) und Berichten (205) der QoE-Daten an ein Analyse-Untersystem auf einer Netzwerkseite (32) gemäß einer QoE-Mess- und Berichtsrichtlinie, ausgegeben durch ein Richtlinienkontroll-Untersystem auf der Netzwerkseite (32);
Analysieren (206) durch das Analyse-Untersystem der berichteten QoE-Daten und Unterrichten eines Analyse-Ergebnisses an das Richtlinienkontroll-Untersystem;
Formulieren (207) durch das Richtlinienkontroll-Untersystem einer Kontrollrichtlinie gemäß Benutzerabonnementdaten, die in dem Richtlinienkontroll-Untersystem gespeichert sind, einer Netzwerkrichtlinienkonfiguration und des Analyse-Ergebnisses und Ausgeben der Kontrollrichtlinie an ein Zugangs-Untersystem und/oder an ein Schalt-Untersystem auf der Netzwerkseite (32); und
Ausführen (208) durch das Zugangs-Untersystem und/oder das Schalt-Untersystem einer Richtlinienkontrolle gemäß der Kontrollrichtlinie, um eine geschlossene Regelkreiskontrolle auszuformen.

2. Verfahren nach Anspruch 1, ferner aufweisend:
wenn das Endgerät (31) den Dienst initiiert, Ausgeben (203) durch das Richtlinienontroll-Untersystem der QoE-Mess- und Berichtsrichtlinie an das Endgerät.

3. Verfahren nach Anspruch 2, ferner aufweisend: bevor die QoE-Mess- und Berichtsrichtlinie an das Endgerät (31) ausgegeben wird,
Bestimmen (202) durch das Richtlinienkontroll-Untersystem der QoE-Mess- und Berichtsrichtlinie gemäß der Benutzerabonnementdaten und der Netzwerkrichtlinienkonfiguration.

4. Verfahren nach Anspruch 2, wobei das Ausgeben der QoE-Mess- und Berichtsrichtlinie an das Endgerät aufweist:
Ausgeben der QoE-Mess- und Berichtsrichtlinie an das Endgerät (31) durch Hinzufügen eines Nachrichtentyps oder -felds in einer Signalisierung der Steuerungsebene während eines Prozesses eines Zugriffs oder Aktivierens des Dienstes; oder
Ausgeben der QoE-Mess- und Berichtsrichtlinie an das Endgerät (31) durch Austauschen von Nachrichten der Medienebene mit dem Endgerät, nachdem ein Träger zwischen dem Endgerät und der Netzwerkseite eingerichtet ist.

5. Verfahren nach einem der Ansprüche 1 bis 4, ferner umfassend: bevor die QoE-Daten an das Analyse-Untersystem berichtet werden,
Einkapseln (205) durch das Endgerät (31) der gemessenen QoE-Daten.

6. Verfahren nach Anspruch 5, wobei das Berichten der QoE-Daten an das Analyse-Untersystem aufweist:
Melden der QoE-Daten an das Analyse-Untersystem zusammen mit einer Nachricht der Medienebene.

7. System zum Erlangen der Erfahrungsqualität, QoE, wobei das System aufweist: ein Endgerät (31) und eine Netzwerkseite (32), wobei die Netzwerkseite (32) ein Zugangs-Untersystem, ein Schalt-Untersystem, ein Analyse-Untersystem und ein Richtlinienkontroll-Untersystem aufweist, wobei:
das Endgerät (31) konfiguriert ist, während des Ablaufs eines Dienstes periodisch QoE Daten des Endgeräts (31) zu messen und die QoE-Daten an das Analyse-Untersystem auf der Netzwerkseite (32) gemäß einer QoE-Mess- und Berichtsrichtlinie, die durch das Richtlinienkontroll-Untersystem ausgegeben ist, zu berichten;
das Richtlinienkontroll-Untersystem konfiguriert ist, während des Ablaufs des Dienstes die QoE-Mess-, Kontrollrichtlinie an das Endgerät (31) zu berichten und die von dem Endgerät (31) berichteten QoE-Daten zu empfangen;
das Analyse-Untersystem ferner konfiguriert ist, die empfangenen QoE-Daten zu analysieren und ein Analyse-Ergebnis an das Richtlinienkontroll-Untersystem zu unterrichten,
das Richtlinienkontroll-Untersystem konfiguriert ist, eine Kontrollrichtlinie gemäß Benutzerabonnementdaten, die in dem Richtlinienkontroll-Untersystem gespeichert sind, einer Netzwerkrichtlinienkonfiguration und des Analyse-Ergebnisses zu formulieren und die Kontrollrichtlinie an das Zugangs-Untersystem und/oder an das Schalt-Untersystem auszugeben, und
das Zugangs-Untersystem und/oder das Schalt-Untersystem konfiguriert ist, eine Richtlinienkontrolle gemäß der Kontrollrichtlinie auszuführen, um eine geschlossene Regelkreiskontrolle auszuformen.

8. System nach Anspruch 7, wobei das Richtlinienkontroll-Untersystem ferner konfiguriert ist, vordem Ausgeben der QoE-Mess- und Berichtsrichtlinie an das Endgerät (31) die QoE-Mess- und Berichtsrichtlinie gemäß der Benutzerabonnementdaten und der Netzwerkrichtlinienkonfiguration zu bestimmen.

9. System nach der Anspruch 7 oder 8, wobei das Endgerät (31) ferner konfiguriert ist, vor dem Berichten der QoE-Daten an das Analyse-Untersystem die gemessenen QoE-Daten einzukapseln.

10. Netzwerkvorrichtung, wobei die Netzwerkvorrichtung aufweist: ein Richtlinienbestimmungs-Modul, ein Ausgabe-Modul, ein Analyse-Modul und ein Ausführungs-Modul, wobei während eines Ablaufs eines Dienstes:
das Richtlinienbestimmungs-Modul konfiguriert ist, eine Erfahrungsqualitäts-, QoE, -Mess- und Berichtsrichtlinie gemäß Benutzerabonnementdaten und einer Netzwerkrichtlinienkonfiguration zu bestimmen;
das Ausgabe-Modul konfiguriert ist, die QoE-Mess- und Berichtsrichtlinie an das Endgerät auszustellen;
das Analyse-Modul konfiguriert ist, die empfangenen QoE-Daten zu analysieren;
das Richtlinienbestimmungs-Modul ferner konfigurier ist, eine Kontrollrichtlinie gemäß der Benutzerabonnementdaten, der Netzwerkrichtlinienkonfiguration und einem Analyseergebnis, das in dem Analyse-Modul gespeichert ist, zu formulieren und die Kontrollrichtlinie an das Ausführungs-Modul auszugeben; und
das Ausführungs-Modul konfiguriert ist, Richtlinienkontrolle gemäß der Kontrollrichtlinie auszuführen, um eine geschlossene Regelkreiskontrolle auszuformen.

## Revendications

1. Procédé pour acquérir une qualité d'expérience, QoE, le procédé comprenant :
pendant la fourniture d'un service,
mesurer périodiquement (204), par un terminal (31), des données de QoE du terminal (31) et rapporter (205) les données de QoE à un sous-système d'analyse sur un côté de réseau (32) selon une mesure de QoE et une politique de rapport fournie par un sous-système de contrôle de politique sur le côté de réseau (32) ;
analyser (206), par le sous-système d'analyse, les données de QoE rapportées et notifier un résultat d'analyse au sous-système de contrôle de politique ;
formuler (207), par le sous-système de contrôle de politique, une politique de contrôle selon des données d'abonnement d'utilisateur stockées dans le sous-système de contrôle de politique, d'une configuration de politique de réseau et le résultat d'analyse, et fournir la politique de contrôle à un sous-système d'accès et/ou à un sous-système de commutation sur le côté de réseau (32) ; et
effectuer (208), par le sous-système d'accès et/ou le sous-système de commutation, un contrôle de politique selon la politique de contrôle pour former un contrôle en boucle fermée.

2. Procédé selon la revendication 1, comprenant en outre :
lorsque le terminal (31) initie le service, fournir (203), par le sous-système de contrôle de politique, la mesure de QoE et la politique de rapport au terminal.

3. Procédé selon la revendication 2, comprenant en outre : avant que la mesure de QoE et la politique de rapport soient fournies au terminal (31),
déterminer (202), par le sous-système de contrôle de politique, la mesure de QoE et la politique de rapport selon les données d'abonnement d'utilisateur et la configuration de politique de réseau.

4. Procédé selon la revendication 2, dans lequel la fourniture de la mesure de QoE et de la politique de rapport au terminal comprend :
fournir la mesure de QoE et la politique de rapport au terminal (31) en ajoutant un champ ou type de message dans une signalisation de plan de contrôle pendant un processus d'accès ou d'activation du service ; ou
fournir la mesure de QoE et la politique de rapport au terminal (31) en échangeant des messages de plan de média avec le terminal, après qu'un support soit établi entre le terminal et le côté de réseau.

5. Procédé selon l'une quelconque des revendications 1 à 4, comprenant en outre : avant que les données de QoE soient rapportées au sous-système d'analyse,
encapsuler (205), par le terminal (31), les données de QoE mesurées.

6. Procédé selon la revendication 5, dans lequel le rapport des donnés de QoE au sous-système d'analyse comprend :
rapporter les données de QoE au sous-système d'analyse ensemble avec un message de plan de média.

7. Système pour acquérir une qualité d'expérience, QoE, le système comprenant : un terminal (31) et un côté de réseau (32), dans lequel le côté de réseau (32) comprend un sous-système d'accès, un sous-système de commutation, un sous-système d'analyse et un sous-système de contrôle de politique, dans lequel
le terminal (31) est configuré pour, pendant la fourniture d'un service, mesurer périodiquement des données de QoE du terminal (31) et rapporter les données de QoE au sous-système d'analyse sur le côté de réseau (32) selon une mesure de QoE et une politique de rapport fournies par le sous-système de contrôle de politique ; et
le sous-système de contrôle de politique est configuré pour, pendant la fourniture d'un service, fournir la mesure de QoE, rapporter la politique au terminal (31) et recevoir les données de QoE rapportées à partir du terminal (31) ;
le sous-système d'analyse est en outre configuré pour analyser les données de QoE reçues et notifier un résultat d'analyse au sous-système de contrôle de politique,
le sous-système de contrôle de politique est configuré pour formuler une politique de contrôle selon des données d'abonnement d'utilisateur stockées dans le système de contrôle de politique, d'une configuration de politique de réseau et le résultat d'analyse, et fournir la politique de contrôle au sous-système d'accès et/ou au sous-système de commutation, et
le sous-système d'accès et/ou le sous-système de commutation est configuré pour réaliser un contrôle de politique selon la politique de contrôle pour former un contrôle en boucle fermée.

8. Système selon la revendication 7, dans lequel le sous-système de contrôle de politique est en outre configuré pour, avant de fournir la mesure de QoE et de rapporter la politique au terminal, déterminer la mesure de QoE et la politique de rapport selon des données d'abonnement d'utilisateur et la configuration de politique de réseau.

9. Système selon la revendication 7 ou 8, dans lequel le terminal (31) est en outre configuré pour, avant de rapporter les données de QoE au sous-système d'analyse, encapsuler les données de QoE mesurées.

10. Dispositif de réseau, le dispositif de réseau comprenant : un module de détermination de politique, un module de fourniture, un module d'analyse et un module d'exécution, dans lequel pendant la fourniture d'un service,
le module de détermination de politique est configuré pour déterminer une mesure de qualité d'expérience QoE et une politique de rapport, selon des données d'abonnement d'utilisateur et une configuration de politique de réseau ;
le module de fourniture est configuré pour fournir la mesure de QoE et la politique de rapport au terminal ;
le module d'analyse est configuré pour analyser les données de QoE reçues ;
le module de détermination de politique est en outre configuré pour formuler une politique de contrôle selon les données d'abonnement d'utilisateur, la configuration de politique de réseau et un résultat d'analyse stocké dans le module d'analyse, et fournir la politique de contrôle au module d'exécution ; et
le module d'exécution est configuré pour effectuer un contrôle de politique selon la politique de contrôle pour former un contrôle en boucle fermée.
